(19) Europäisches Patentamt / European Patent Office / Office européen des brevets

(11) EP 3 109 821 A1

(12) EUROPEAN PATENT APPLICATION

(43) Date of publication:
**28.12.2016 Bulletin 2016/52**

(51) Int Cl.:
***G06T 5/00*** *(2006.01)*

(21) Application number: **15306015.7**

(22) Date of filing: **26.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
- **SABATER, Neus**
  **35576 Cesson-Sévigné (FR)**
- **DRAZIC, Valter**
  **35576 Cesson-Sévigné (FR)**
- **JOUET, Pierrick**
  **35576 Cesson-Sévigné (FR)**

(74) Representative: **Browaeys, Jean-Philippe**
**TECHNICOLOR**
**1-5, rue Jeanne d'Arc**
**92130 Issy-les-Moulineaux (FR)**

(54) **REAL-TIME LIGHT-FIELD DENOISING**

(57) Method for determining the value Φ(x, y) of at least one reference pixel (x, y), the reference pixel (x, y) being part of a reference view V of a matrix of views $M_V$ obtained from a given demultiplexed light-field data DmX_Img acquired with a plenoptic device, wherein the method comprises calculating 6 the value Φ(x, y) by averaging the respective weighted values $I^i(x^i, y')$ of a plurality of corresponding pixels $(x^i, y^i)$, the reference pixel (x, y) and the corresponding pixels $(x^i, y^i)$ depicting a same area of a scene captured while belonging to different views $(V, V^i)$ of the matrix of views $M_V$.

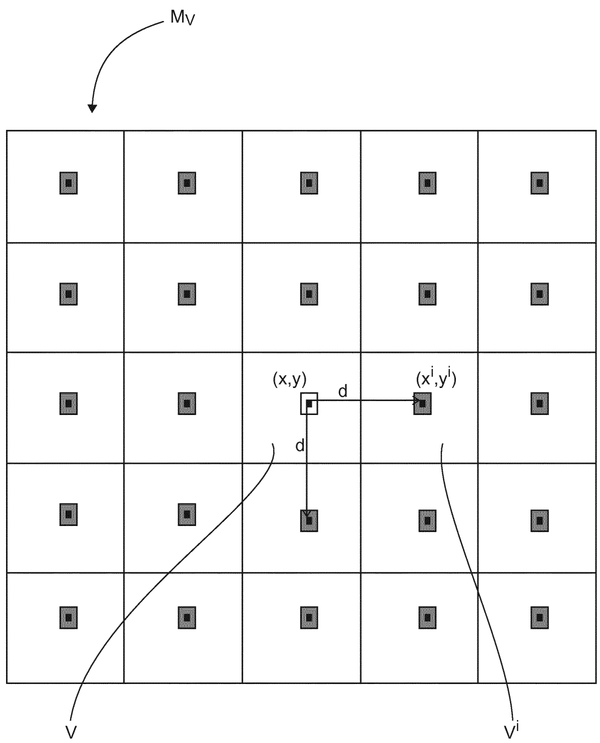


Fig. 1



Printed by Jouve, 75001 PARIS (FR)

## Description

## 1. TECHNICAL FIELD

The field of the invention relates to light-field imaging. More particularly, the invention pertains to technologies for processing light-field data.

Aspects of the invention relate to a method for denoising in real-time light data acquired with a plenoptic camera.

## 2. BACKGROUND ART

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Conventional image capture devices render a three-dimensional scene onto a two-dimensional sensor. During operation, a conventional capture device captures a two-dimensional (2-D) image representing an amount of light that reaches each point on a photo-sensor (or photo-detector) within the device. However, this 2-D image contains no information about the directional distribution of the light rays that reach the photo-sensor (may be referred to as the light-field). Depth, for example, is lost during the acquisition. Thus, a conventional capture device does not store most of the information about the light distribution from the scene.

Light-field capture devices (also referred to as "light-field data acquisition devices") have been designed to measure a four-dimensional (4D) light-field of the scene by capturing the light from different viewpoints of that scene. Thus, by measuring the amount of light traveling along each beam of light that intersects the photo-sensor, these devices can capture additional optical information (information about the directional distribution of the bundle of light rays) for providing new imaging applications by post-processing. The information acquired/obtained by a light-field capture device is referred to as the light-field data. Light-field capture devices are defined herein as any devices that are capable of capturing light-field data.

Light-field data processing comprises notably, but is not limited to, generating refocused images of a scene, generating perspective views of a scene, generating depth maps of a scene, generating extended depth of field (EDOF) images, generating stereoscopic images, and/or any combination of these.

There are several groups of light-field capture device.

A first group of light-field capture device, also referred to as "camera array", embodies an array of cameras that image onto a single shared image sensor or different image sensors. These devices require therefore an extremely accurate arrangement and orientation of cameras, which make their manufacturing often complex and costly.

A second group of light-field capture device, also referred to as "plenoptic device" or "plenoptic camera", embodies a micro-lens array positioned in the image focal field of the main lens, and before a photo-sensor on which one micro-image per micro-lens is projected. Plenoptic cameras are divided in two types depending on the distance between the micro-lens array and the photo-sensor. Regarding the "type 1 plenoptic cameras", this distance is equal to the micro-lenses focal length (as presented in the article "Light-field photography with a hand-held plenoptic camera" by R. Ng et al., CSTR, 2(11), 2005). Regarding the "type 2 plenoptic cameras", this distance differs from the micro-lenses focal length (as presented in the article "The focused plenoptic camera" by A. Lumsdaine and T. Georgiev, ICCP, 2009). For both type 1 and type 2 plenoptic cameras, the area of the photo-sensor under each micro-lens is referred to as a microimage. For type 1 plenoptic cameras, each microimage depicts a certain area of the captured scene and each pixel of this microimage depicts this certain area from the point of view of a certain sub-aperture location on the main lens exit pupil. For type 2 plenoptic cameras, adjacent microimages may partially overlap. One pixel located within such overlaying portions may therefore capture light rays refracted at different sub-aperture locations on the main lens exit pupil.

The raw image of the scene obtained as a result is the sum of all the pixels of the photo-sensor belonging to one microimage and/or another. The angular information of the light-field is then given by the relative position of pixels in the microimages with respect to the center of these microimages.

Based on this raw image, the extraction of an image of the captured scene from a certain point of view, also called "demultiplexing" in the following description, can be performed. For type 1 plenoptic cameras, such demultiplexing step consists in reorganizing the pixels of this raw image in such a way that all pixels capturing the scene with a certain angle of incidence are stored in a same pixel grid (also commonly called "view" or "sub-aperture view" in the scientist language). For type 2 plenoptic cameras, this process also involves stitching the overlapping portions of the microimages and not only reorganizing pixels, as presented in the article "Generating EPI Representations of 4D Light Fields with a Single Lens Focused Plenoptic Camera", Wanner et al., ISCV 2011). The demultiplexing process can also be seen as a data conversion from the 2D raw image to the 4D light-field. The resulting demultiplexed light-field data can be represented by a matrix of views in which all the views are horizontally and vertically aligned.

One of the main challenges to overcome in light-field data processing arises from the observation that recovered images from plenoptic cameras suffer from several image artifacts and in particular from image noise. When considering the background art in computational imaging, a considerable amount of work has been produced in the field of image denoising. However, only a few address light-field data processing.

Regarding the first group of light-field capture device (the camera arrays), documents of the background art, among which the article entitled "A non-local algorithm for image denoising", by Buades, Antoni (2005), disclose a denoising method based on the comparison of image patches applied on different 2D images. One significant drawback of this method lies into its high complexity burden. Indeed, in order to proceed to the building of the light-field data based on the different 2D images acquired from each camera of the cameras array, it is necessary to determine the position of the corresponding pixels in each 2D image. In the following description, the expression "corresponding pixels" refers to pixels of the light-field data, which depict a same area of the captured scene, but from different points of views. One significant drawback of this method lies into its high complexity burden. Indeed, in order to proceed to the building of the light-field data based on the different 2D images acquired from each camera of the cameras array, it is necessary to determine the position of these corresponding pixels in each 2D image. This step is usually conducted by comparing small patches in the same image, and induces a significant increase of the computing load. As a matter of example, taking an image of size N*M, comparing 7*7 pixel patches in a region of 21*21 pixels has a complexity of N*M*49*441 operations. Thus, a skilled person wishing to develop a method for denoising a light-field acquired with a plenoptic device, also referred to under the terms "plenoptic image", while keeping the corresponding computing load at the minimum, would be diverted from taking into consideration the teachings of a method for denoising a light-field acquired with a camera array.

Regarding the plenoptic devices, documents of the background art disclose a processing method performed on an input image before demultiplexing, which consists in averaging the value of a pixel group that depicts the same region of an object space. This method has several drawbacks. First, it induces a pre-processing step performed on the input image before demultiplexing. This additional step involves a significant increase of the corresponding computing load. In addition, this method cannot be implemented on a light-field data that has already been demultiplexed. Furthermore, this method involves an indistinct and irreversible reduction of the light-field workable data. Indeed, when capturing a particular area of a scene featuring high discontinuities, for example at image borders, it is crucial to preserve the diversity of values of the pixels acquired in the input image, such workable data representing precious information to be revealed in further processing of the input image, after demultiplexing. When such information is lost and cannot be recovered at a later stage, it shall be made up by the implementation of a heavy resource-consuming interpolation process, which tend to further increase the computation load of the light-field image processing.

It would hence be desirable to provide a method for processing a plenoptic image, which shows improvements over the background art.

It would be desirable to provide such a method, which could be implemented on any demultiplexed plenoptic image, while limiting significantly the computing load of the corresponding process, and enabling the preservation of the workable data of the light field.

## 3. SUMMARY OF THE INVENTION

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

According to a first aspect of the invention there is provided, a method for determining the value of at least one reference pixel is disclosed, the reference pixel being part of a reference view of a matrix of views obtained from a given demultiplexed light-field data acquired with a plenoptic device. This method comprises calculating the value of the reference pixel by averaging the respective weighted values of a plurality of corresponding pixels, the reference pixel and the corresponding pixels depicting a same area of a scene captured while belonging to different views of the matrix of views.

In the following description, the expression "light-field data acquired with a plenoptic device" is also referred to under the terms "plenoptic image". The expression "demultiplexed light-field data acquired with a plenoptic device" refers to the raw image of a scene acquired with a plenoptic device, whose pixels have been demultiplexed. Such demultiplexed light-field data are usually represented by a matrix of views in which all the views are horizontally and vertically aligned and depict the same scene with different angles of incidence. In the following description, the expression "reference view" refers to a particular view of the matrix that comprises at least one pixel, referred to as "a reference pixel", whose

value shall be determined.

A skilled person will understand that neither the location, nor the value of such a "reference pixel" is set in time, the only purpose of this expression being, in the course of implementing the method according to the present disclosure, to distinguish a pixel, whose value is being determined, from the others.

Given the particular properties of the demultiplexed plenoptic images, the shift between corresponding pixels of two consecutive horizontal or vertical views, also referred to under the terms "parallax" or "disparity", remain constant through the views.

A method according to embodiments of the invention relies on a new and inventive approach of plenoptic image processing, which takes benefit on the specific layout of demultiplexed plenoptic images, and more precisely on the invariability of the disparity, in order to implement a method for determining the value of a pixel, which features a low computational load, while preserving the workable data of the light field.

Another advantage of such a method is that it is adapted to denoise the value of at least one reference pixel of a demultiplexed plenoptic image.

Another advantage of such a method is that it is adapted to be implemented on any demultiplexed plenoptic image.

Due to its low complexity, such a method is also adapted to be implemented in real-time.

A skilled person will understand that in some particular embodiment of the disclosure, the demultiplexed plenoptic image is not displayed. Nevertheless, on an analytical point of view, the position of each corresponding pixel can be defined as a particular solution of the application of a disparity function of the light-field data on the position of the reference pixel.

Indeed, in one particular embodiment, a method for determining the value of at least one reference pixel of a demultiplexed plenoptic image is disclosed, wherein the value of the reference pixel is equal to a weighted average of the respective values of a plurality of corresponding pixels, the coordinates of each corresponding pixel being a solution of the application of a disparity function of the light-field data on the coordinates of the reference pixel.

In one embodiment, the step of calculating implements a variable weight for each of the plurality of corresponding pixels.

One advantage of this technical feature is the ability to adapt the weight, and therefore the method for determining the reference pixel value, according to specific parameters, including but not limited to the related value of the corresponding pixel compared with the reference pixel, the position of the reference pixel on the captured scene, and a modulation parameter pre-set by an operator.

One drawback of such an adaptable weight is the corresponding increase of computational load.

In one embodiment, the method comprises a prior step of detecting discontinuities on the light-field data.

This technical feature allows adapting the method for determining the reference pixel value according to the level of discontinuity detected in the reference pixel neighbourhood.

In one particular embodiment, this prior-step of detection is implemented by an edge detector, as described in the article entitled ***"A Computational Approach to***

***Edge Detection"* by John Canny.**

In one embodiment, the value of the variable weight is either:

- equal to 1 when the reference pixel is not positioned on an area of high discontinuities, or
- lower than 1 otherwise.

In one embodiment, a threshold value above which the level of discontinuity is considered as high is pre-set by an operator.

On the one hand, it is well known that the risk of artifacts creation increases with the level of discontinuity, for example when the position of the reference pixel is getting closer to an image border. It is then beneficial to level up the accuracy of the weight in order to limit the creation of artifacts. On the other hand, such an increase of the weight accuracy also involves an increase of the computational load. Thus, the adaptation of the weight setting, depending on the outcome of the discontinuities detection, has the double advantage to prevent the creation of artifacts at the edges of the captured image, while limiting the computational burden of the calculation process.

In one embodiment, the value of the variable weight is equal to the following equation when the reference pixel is not positioned on an area of high discontinuities:

$$W\left((x,y),(x^i,y^i)\right) = \exp\left(-\frac{\left|I_{(x,y)} - I^i{}_{(x^i,y^i)}\right|^2}{h^2}\right)$$

Where $I_{(x,y)}$ " $I'_{(x^i,y^i)}$ is the variation in pixel value between the reference pixel (x,y) and the corresponding pixel $(x^i,y^i)$, and

Where h is a variable modulation parameter.

In one embodiment, the variable weight is determined using a tabulated version of the exponential function.

The computation of the weight according to the above-mentioned formula is then improved.

In one embodiment, the method comprises setting the disparity function.

A method according to this embodiment allows determining in an autonomous way the disparity function of a demultiplexed plenoptic image, in order to determine the positions of the corresponding pixels, based on the position of the reference pixel.

The implementation of a non-accurate disparity estimation is mostly sufficient to implement the method in a satisfactory way. However, a more accurate disparity estimation is preferentially implemented when the reference pixel neighbourhood features a high level of discontinuity.

In one embodiment, setting the disparity function is performed as described in ECCV 2014, "Accurate Disparity Estimation for Plenoptic Images" by N. Sabater, V. Drazic, M. Seifi, G. Sandri and P. Perez**.**

In one embodiment, setting the disparity function depends on the outcome of detecting discontinuities.

This technical feature has the double advantage to allow setting a satisfactory disparity function, while limiting the computational burden of the calculation process.

In one embodiment, the value of the reference pixel depicts the value of a group of pixels surrounding the reference pixel, and the value of the at least one corresponding pixel depicts the value of a group of pixels surrounding the at least one corresponding pixel.

It is therefore possible to adopt a patch approach.

In one embodiment, the light field data is of a video type.

According to a second aspect of the invention there is provided, an apparatus for determining the value of at least one reference pixel, the reference pixel being part of a reference view of a matrix of views obtained from a given demultiplexed light-field data acquired with a plenoptic device. Such an apparatus comprises a module for computing the respective weighted values of a plurality of corresponding pixels, the reference pixel and the corresponding pixels depicting a same area of a scene captured while belonging to different views of the matrix of views, in order to determine the value of the reference pixel.

In one embodiment, the apparatus embodies at least one sensor adapted to detect discontinuities on the light-field data.

In one particular embodiment of the technique, the present disclosure pertains a computer program product downloadable from a communication network and/or recorded on a medium readable by a computer and/or executable by a processor. Such a computer program product comprises program code instructions for implementing the method.

In one particular embodiment of the technique, the present disclosure pertains a non-transitory computer-readable carrier medium comprising a computer program product recorded thereon and capable of being run by a processor, including program code instructions for implementing the method.

While not explicitly described, the present embodiments may be employed in any combination or sub-combination.

## 4. **BRIEF DESCRIPTION OF THE DRAWINGS**

The invention can be better understood with reference to the following description and drawings, given by way of example and not limiting the scope of protection, and in which:

- Figure 1 is a diagram illustrating a matrix of views resulting from the demultiplexing of light-field data,
- Figure 2 is a flow chart of the successive steps implemented when performing a method for determining the value of a reference pixel, according to one embodiment of the disclosure,
- Figure 3 is a schematic block diagram illustrating an apparatus for determining the value of a reference pixel, according to one embodiment of the disclosure.

The components in the figures are not necessarily to scale, emphasis instead being placed upon illustrating

the principles of the disclosure.

## 5. DETAILED DESCRIPTION

The present disclosure relates to methods for determining the processed value of at least one pixel of a matrix of views resulting from the demultiplexing of a light-field data acquired from a plenoptic camera. Many specific details of certain embodiments of the disclosure are set forth in the following description and in figures 2 to 3 to provide a thorough understanding of such embodiments. One skilled in the art, however, will understand that the present disclosure may have additional embodiments, or may be practiced without several of the details described in the following description.

Matrix of views $M_v$

Figure 1 illustrates a matrix of views $M_v$, in this case, 5*5 views, obtained from a demultiplexed plenoptic image. Each of these views depicts a same captured scene, but from different point of views, corresponding to different sub-apertures of the plenoptic camera main lens. All the views are vertically and horizontally aligned. In Figure 1, the central view is randomly designated as a reference view V, comprising a reference pixel of coordinates (x, y) whose value I(x, y) is intended to be denoised. In the following description, the different pixels are referred to through their coordinates on the matrix of views $M_v$. For example, the reference pixel is referred to as (x, y). In Figure 1, the reference view V is surrounded by corresponding views $V^i$ comprising for each of them one corresponding pixel $(x^i, y^i)$ whose value is $I^i(x^i, y^i)$, with i being the view index.

Given the properties of the plenoptic images, the shift d between corresponding pixels $(x^i, y^i)$ of two consecutive horizontal or vertical views $V^i$, also referred to under the terms "parallax" or "disparity", remain constant through the views. A skilled person will understand that in some particular embodiment of the disclosure, the demultiplexed plenoptic image is not displayed under the form of a matrix of corresponding views. Nevertheless, on an analytical point of view, the position of each corresponding pixel $(x^i, y^i)$ can therefore be defined as a particular solution of the application of a disparity function D(x, y) of the light-field data on the position of the reference pixel (x, y).

The general principle of the disclosure relies on a new and inventive approach of Non-Local means processing method, specific to demultiplexed plenoptic images, which consists in replacing the heavy loading algorithms of corresponding pixels mapping of background art by such a non-complex and invariable disparity function.

Description of a denoising method

Figure 2 illustrates in more details the successive steps implemented by a method for denoising a demultiplexed plenoptic image according to one embodiment of the disclosure.

After an initialization step INIT 1, both a demultiplexed plenoptic image DmX_Img and the coordinates (x, y) of a reference pixel to be processed are inputted (step INPUT 2). A skilled person will understand that the step INPUT 2 may be conducted either automatically or by an operator.

At step DETECT 3, the level of discontinuities at the position of the reference pixel (x, y) is measured, for example by implementing an edge detector, as described in the article entitled "A Computational Approach to Edge Detection" by John Canny. A skilled person will understand that in another embodiment of the present disclosure, the method for denoising may be implemented without running the step DETECT 3, therefore reducing on the one hand the corresponding computing load, while increasing on the other hand the risk of artifacts creation at the edges of the captured image.

At step SETTING D(x, y) 4, the disparity function D(x, y) is determined, depending on the outcome of the step DETECT 3. If the reference pixel (x, y) is not positioned at one edge of the captured image, the disparity estimation does not need to be very accurate, an integer accuracy being for example sufficient, and can therefore be performed by running a fast disparity estimation method, as the one presented in "A precise real-time stereo algorithm" by Neus Sabater, Valter Drazic, Proceedings of the 27th Conference on Image and Vision Computing New Zealand, ACM, 2012. On the contrary, if the reference pixel (x, y) is positioned at one edge of the image, as detected following the step DETECT 3, a more accurate disparity estimation can be performed, as described in ECCV2014, "Accurate Disparity Estimation for Plenoptic Images" by N. Sabater, V. Drazic, M. Seifi, G. Sandri and P. Perez. A skilled person will understand that in the case the present method is implemented without running the step DETECT 3, the step SETTING D(x, y) 4 could be run by conducting either a fast or a more accurate disparity estimation, depending on the assumption made on the position of the reference pixel (x, y) regarding the edges of the captured image.

At step SETTING W((x, y), $(x^i, y')$) 5, the weight W between the reference pixel (x, y) and the corresponding pixel $(x^i, y^i)$ is determined depending on the outcome of the step DETECT 3. If the reference pixel (x, y) is not positioned at one edge of the captured image, we know by construction that the values I(x, y) and $I^i(x^i, y^i)$ are similar. It is therefore reasonable to set a value of weight W equal to 1. On the contrary, if the reference pixel (x, y) is positioned at one edge

of the image, as detected following the step DETECT 3, it is relevant to consider more accurate weights as described in the article entitled "A non-local algorithm for image denoising", by Buades, Antoni (2005), with:

$$W\left((x,y),(x^i,y^i)\right) = \exp\left(-\frac{\left|I_{(x,y)} - I^i{}_{(x^i,y^i)}\right|^2}{h^2}\right)$$

Where $|I_{(x,y)}-I^i{}_{(xi,yi)}|$ is the variation in pixel value between the reference pixel (x,y) and the corresponding pixel $(x^i,y^i)$, and where h is a variable parameter of the algorithm used by an operator to modulate the sensitivity of the weight W to the pixel intensity variations. These second weights are obviously more accurate but also more computationally complex. Thus, choosing a weight value equal either to 1, or to the formulation of Buades mentioned above, depending on the outcome of the step DETECT 3, has the double advantage to prevent the creation of artifacts at the edges of the captured image, while limiting the computational burden of the calculation process.

In one embodiment of the disclosure, the computation of the weight W regarding the formulation of Buades can be performed in an efficient way using a tabulated version of the exponential function.

A skilled person will understand that in the case the present method is implemented without running the step DETECT 3, the step SETTING $W((x, y), (x^i, y^i))$ 5 could be run by choosing a weight value W equal either to 1, or to the formulation of Buades mentioned above, depending on the assumption made on the position of the reference pixel (x, y) regarding the edges of the captured image.

At step CALCUL 6, the denoised value $\phi(x, y)$ of the reference pixel (x, y) is calculated based on the following equation:

$$\Phi(x,y) = \frac{1}{C}\sum_{(x^i,y^i)\in\theta_{xy}} W\left((x,y),(x^i,y^i)\right) I^i(x^i,y^i)$$

Where $\theta_{xy}$ is the set of corresponding pixel positions $(x^i, y^i)$ in the other views $V^i$ of the matrix of views $M_v$ and $C=\sum_{(x^i,y^i)\in\theta_{xy}} W((x, y),(x^i,y^i))$ is the normalization factor.

In one particular embodiment of the disclosure, the present method for denoising the value of one reference pixel (x, y) is repeated for each pixel of the reference view V, in order to obtain a denoised demultiplexed plenoptic image.

In one particular embodiment of the disclosure, the present method is implemented for determining the value of a patch $B_{(x, y)}$ centered at the reference pixel (x, y) based on the respective values of patches $B^i{}_{(xi, yi)}$ centered on the corresponding pixels $(x^i, y^i)$. Thus, in this particular embodiment, the value I(x, y) of the reference pixel (x, y) depicts the value of a group $B_{(x, y)}$ of pixels surrounding the reference pixel (x, y), and the value $I^i(x^i, y^i)$ of the reference pixel $(x^i, y^i)$ depicts the value of a group $B^i{}_{(xi, yi)}$ of pixels surrounding the corresponding pixel $(x^i, y^i)$. In one particular embodiment, the value of the patch $B_{(x, y)}$ is calculated by averaging the respective values of the pixels included in said patch $B_{(x, y)}$.

One of the main advantages of the present method is that it can be implemented on any demultiplexed plenoptic image, while limiting significantly the computing load of the corresponding process, and enabling the preservation of the workable data of the light field.

Due to the non-complexity and the high speed of such a method, it can be implemented in real-time, for example for the processing of light-field data of a video type.

**Figure 3** is a schematic block diagram illustrating an example of an apparatus for determining the denoised value $\phi(x, y)$ of at least one reference pixel (x, y) obtained from a given demultiplexed plenoptic image DmX-Img, in a way which limits significantly the computing load of the corresponding process, according to an embodiment of the present disclosure.

An apparatus 7 illustrated in **Figure 3** includes a processor 9, a storage unit 10, an interface unit 11 and a sensor 8, which are connected by a bus 12. Of course, constituent elements of the computer apparatus 7 may be connected by a connection other than a bus connection using the bus 12.

The processor 9 controls operations of the apparatus 7. The storage unit 10 stores at least one program to be executed by the processor 9, and various data, including data of plenoptic images, parameters used by computations performed by the processor 9, intermediate data of computations performed by the processor 9, and so on. The storage unit 10 may notably store the value and the coordinates of a reference pixel (x, y), as provided by a plenoptic device. The processor 9 may be formed by any known and suitable hardware, or software, or by a combination of hardware and software. For example, the processor 9 may be formed by dedicated hardware such as a processing circuit, or by a programmable processing unit such as a CPU (Central Processing Unit) that executes a program stored in a memory

thereof.

The storage unit 10 may be formed by any suitable storage or means capable of storing the program, data, or the like in a computer-readable manner. Examples of the storage unit 10 include non-transitory computer-readable storage media such as semiconductor memory devices, and magnetic, optical, or magneto-optical recording media loaded into a read and write unit. The program causes the processor 9 to perform a process for determining the denoised value $\phi(x, y)$ of at least one reference pixel (x, y) obtained from a given plenoptic image DmX-Img, by computing the respective weighted values $I^i(x^i, y')$ of a plurality of corresponding pixels $(x^i, y^i)$ according to an embodiment of the present disclosure as described above with reference to **Figure 2.**

The interface unit 11 provides an interface between the apparatus 7 and an external apparatus. The interface unit 11 may be in communication with the external apparatus via cable or wireless communication. In this embodiment, the external apparatus may be a plenoptic camera. In this case, plenoptic images can be input from the plenoptic camera to the apparatus 7 through the interface unit 11, and then stored in the storage unit 10.

The apparatus 7 and the plenoptic camera may communicate with each other via cable or wireless communication.

Although only one processor 9 is shown on **Figure 3,** a skilled person will understand that such a processor may comprise different modules and units embodying the functions carried out by the apparatus 7 according to embodiments of the present disclosure, such as:

- A module for estimating the disparity function D(x, y);
- A module for estimating the weights W of the corresponding pixels $(x^i, y^i)$;
- A module for computing the respective weighted values $I^i(x^i, y^i)$ of the corresponding pixels $(x^i, y^i)$ in order to determine 6 the value $\phi(x, y)$.

These modules may also be embodied in several processors 9 communicating and co-operating with each other.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects.

When the present principles are implemented by one or several hardware components, it can be noted that a hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas), which receive or transmit radio signals. In one embodiment, the hardware component is compliant with one or more standards such as ISO/IEC 18092 / ECMA-340, ISO/IEC 21481 / ECMA-352, GSMA, StoLPaN, ETSI / SCP (Smart Card Platform), GlobalPlatform (i.e. a secure element). In a variant, the hardware component is a Radio-frequency identification (RFID) tag. In one embodiment, a hardware component comprises circuits that enable Bluetooth communications, and/or Wi-fi communications, and/or Zigbee communications, and/or USB communications and/or Firewire communications and/or NFC (for Near Field) communications.

Furthermore, aspects of the present principles can take the form of a computer readable storage medium. Any combination of one or more computer readable storage medium(s) may be utilized.

Thus for example, it will be appreciated that any flow charts, flow diagrams, state transition diagrams, pseudo code, and the like represent various processes which may be substantially represented in computer readable storage media and so executed by a computer or a processor, whether or not such computer or processor is explicitly shown.

Although the present disclosure has been described with reference to one or more examples, a skilled person will recognize that changes may be made in form and detail without departing from the scope of the disclosure and/or the appended claims.

## Claims

1. Method for determining the value $\phi(x, y)$ of at least one reference pixel (x, y), the reference pixel (x, y) being part of a reference view (V) of a matrix of views $(M_V)$ obtained from a given demultiplexed light-field data (DmX_Img) acquired with a plenoptic device, the method comprising calculating (6) the value $\phi(x, y)$ by averaging the respective weighted values $I^i(x^i, y')$ of a plurality of corresponding pixels $(x^i, y^i)$, the reference pixel (x, y) and the corresponding pixels $(x^i, y^i)$ depicting a same area of a scene captured while belonging to different views $(V, V^i)$ of the matrix of

views ($M_v$).

**2.** Method according to claim 1, wherein calculating (6) implements a variable weight (W) for each of the plurality of corresponding pixels ($x^i$, $y^1$).

**3.** Method according to claim 2, comprising a prior step of detecting (3) discontinuities on the light-field data.

**4.** Method according to claim 3, wherein the value of the variable weight (W) is either:

- equal to 1 when the reference pixel (x, y) is not positioned on an area of high discontinuities, or
- lower than 1 otherwise.

**5.** Method according to claim 3 or 4, wherein the value of the variable weight (W) is equal to the following equation when the reference pixel (x, y) is not positioned on an area of high discontinuities:

$$W\left((x,y),(x^i,y^i)\right) = \exp\left(-\frac{\left|I_{(x,y)} - I^i{}_{(x^i,y^i)}\right|^2}{h^2}\right)$$

Where h is a variable modulation parameter.

**6.** Method according to claim 5, wherein the variable weight (W) is determined using a tabulated version of the exponential function.

**7.** Method according to any one of claims 1 to 6, comprising setting (4) the disparity function D(x, y).

**8.** Method according to claim 7, wherein setting (4) the disparity function D(x, y) depends on the outcome of detecting (3) discontinuities.

**9.** Method according to any one of claims 1 to 8, wherein the value I(x, y) of the reference pixel (x, y) depicts the value of a group $B_{(x,\ y)}$ of pixels surrounding the reference pixel (x, y), and wherein the value $I^i(x^i, y^i)$ of the at least one corresponding pixel ($x^i$, $y^i$) depicts the value of a group $B^i_{(xi,\ yi)}$ of pixels surrounding the at least one corresponding pixel ($x^i$, $y^i$).

**10.** Method according to any one of claims 1 to 9, wherein the light field data is of a video type.

**11.** An apparatus for determining the value ϕ(x, y) of at least one reference pixel (x, y), the reference pixel (x, y) being part of a reference view (V) of a matrix of views ($M_v$) obtained from a given demultiplexed light-field data (DmX_Img) acquired with a plenoptic device, wherein it comprises a module for computing the respective weighted values $I^i(x^i, y^i)$ of a plurality of corresponding pixels ($x^i$, $y^i$), the reference pixel (x, y) and the corresponding pixels ($x^i$, $y^i$) depicting a same area of a scene captured while belonging to different views (V, $V^i$) of the matrix of views ($M_v$), in order to determine the value ϕ(x, y).

**12.** An apparatus of claim 11, wherein it embodies at least one sensor adapted to detect discontinuities on the light-field data.

**13.** A computer program product downloadable from a communication network and/or recorded on a medium readable by a computer and/or executable by a processor, comprising program code instructions for implementing a method according to any one of claims 1 to 10.

**14.** A non-transitory computer-readable carrier medium comprising a computer program product recorded thereon and capable of being run by a processor, including program code instructions for implementing a method according to any of claim 1 to 10.

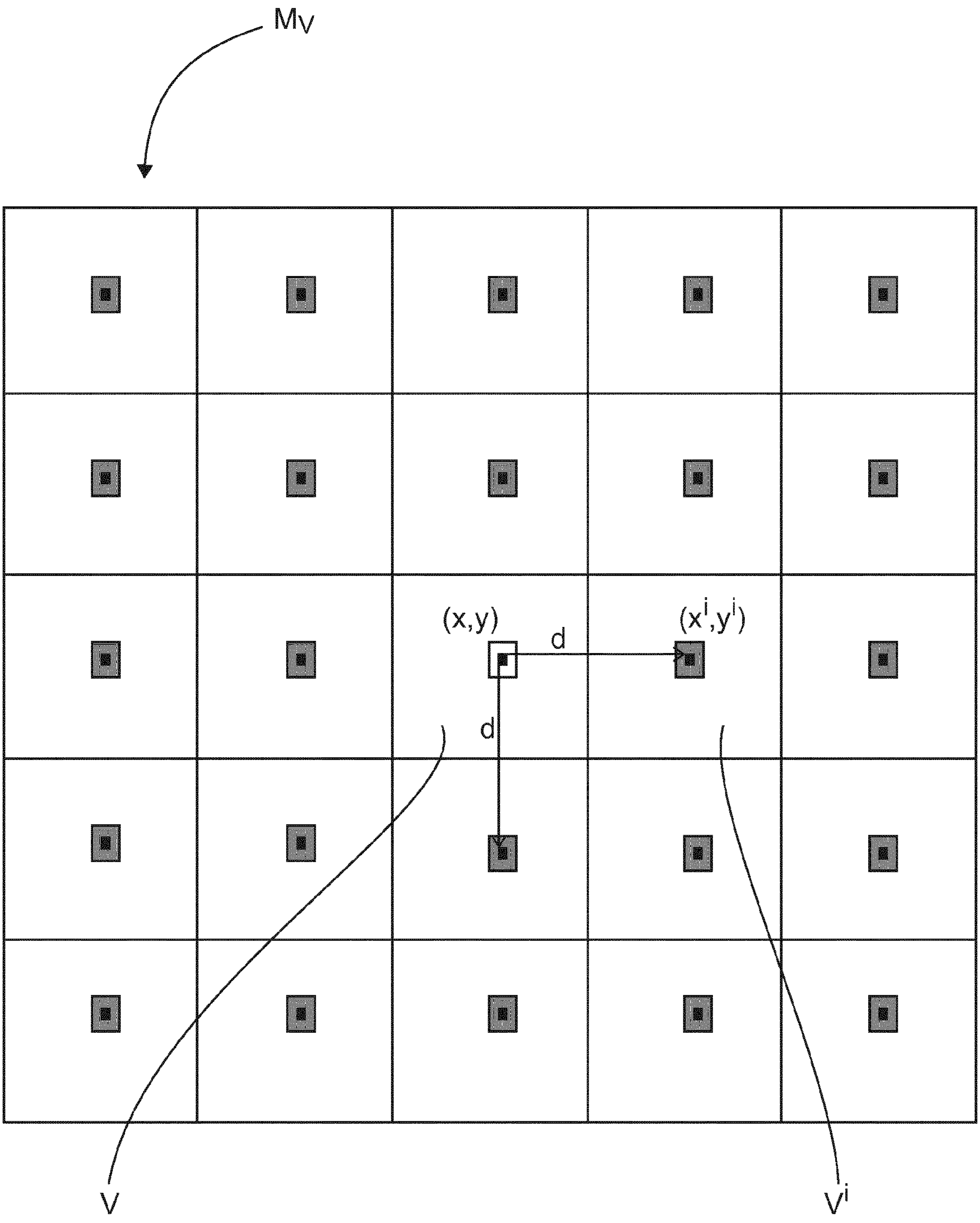


Fig. 1

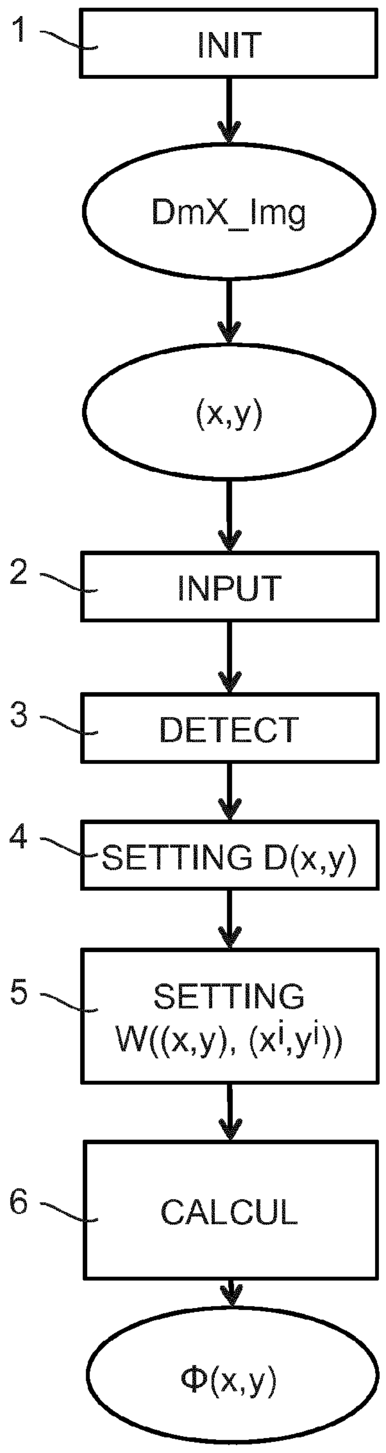
1
INIT
DmX_Img
(x,y)
2
INPUT
3
DETECT
4
SETTING D(x,y)
5
SETTING
W((x,y), (xi,yi))
6
CALCUL
Φ(x,y)

Fig. 2

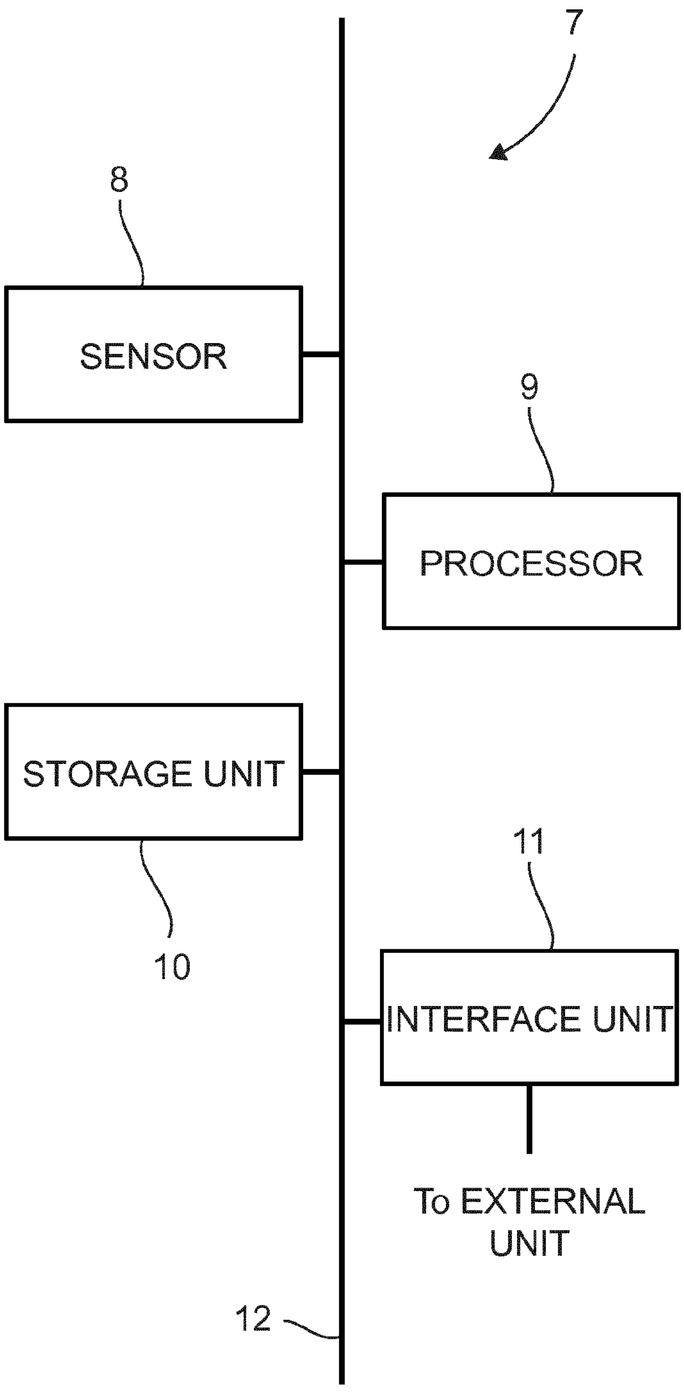
7
8
SENSOR
9
PROCESSOR
STORAGE UNIT
10
11
INTERFACE UNIT
To EXTERNAL UNIT
12

Fig. 3

Europäisches Patentamt
European Patent Office
Office européen des brevets

# EUROPEAN SEARCH REPORT

Application Number
EP 15 30 6015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mariana Barakchieva: "Light Field Denoising and Upsampling Using Variations of the 4D Bilateral Filter", MSc Practicum, 1 January 2013 (2013-01-01), pages 1-10, XP055236148, Retrieved from the Internet: URL:http://www.jku.at/cg/content/e48361/e60689/e228418/e228480/4DBilateralFilter.pdf [retrieved on 2015-12-14] | 1-3,7-14 | INV. G06T5/00 |
| A | * 3.1 Bilateral Filtering; page 3 - page 4 * | 4-6 | |
| A | GOLDLUECKE BASTIAN ET AL: "The Variational Structure of Disparity and Regularization of 4D Light Fields", IEEE COMPUTER SOCIETY CONFERENCE ON COMPUTER VISION AND PATTERN RECOGNITION. PROCEEDINGS, IEEE COMPUTER SOCIETY, US, 23 June 2013 (2013-06-23), pages 1003-1010, XP032492838, ISSN: 1063-6919, DOI: 10.1109/CVPR.2013.134 [retrieved on 2013-10-02] * figure 1 * | 1-14 | |

-/--

TECHNICAL FIELDS SEARCHED (IPC)

G06T

The present search report has been drawn up for all claims

1

| Place of search | Date of completion of the search | Examiner |
|---|---|---|
| Munich | 15 December 2015 | Celik, Hasan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 30 6015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Zeyu Li: "Image patch modeling in a light field", Technical Report No. UCB/EECS-2014-81, 15 May 2014 (2014-05-15), pages 1-114, XP055235685, ISBN: 978-1-321-26002-1 Retrieved from the Internet: URL:http://www.eecs.berkeley.edu/Pubs/TechRpts/2014/EECS-2014-81.pdf [retrieved on 2015-12-11] * 2.5 Non-Local Mean image denoising in a light field; page 32 - page 34 * ----- | 1-14 | |
| A | PEYMAN MILANFAR: "A Tour of Modern Image Filtering: New Insights and Methods, Both Practical and Theoretical", IEEE SIGNAL PROCESSING MAGAZINE, IEEE SERVICE CENTER, PISCATAWAY, NJ, US, vol. 30, no. 1, 1 January 2013 (2013-01-01), pages 106-128, XP011476462, ISSN: 1053-5888, DOI: 10.1109/MSP.2011.2179329 * figure 1 * ----- | 1-14 | TECHNICAL FIELDS SEARCHED (IPC) |
| A | Neus Sabater ET AL: "Light-Field Demultiplexing and Disparity Estimation", , 8 January 2014 (2014-01-08), XP055099221, Retrieved from the Internet: URL:http://hal.archives-ouvertes.fr/docs/00/92/56/52/PDF/iccp2014_hal.pdf [retrieved on 2014-01-29] * 3. Demultiplexing RAW data, first paragraph * ----- | 1-14 | |

1

The present search report has been drawn up for all claims

| Place of search | Date of completion of the search | Examiner |
|---|---|---|
| Munich | 15 December 2015 | Celik, Hasan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **R. NG et al.** Light-field photography with a hand-held plenoptic camera. *CSTR,* 2005, vol. 2 (11
- **A. LUMSDAINE ; T. GEORGIEV.** The focused plenoptic camera. *ICCP,* 2009
- **WANNER et al.** Generating EPI Representations of 4D Light Fields with a Single Lens Focused Plenoptic Camera. *ISCV,* 2011
- **BUADES, ANTONI.** A non-local algorithm for image denoising. *A non-local algorithm for image denoising,* 2005
- **N. SABATER ; V. DRAZIC ; M. SEIFI ; G. SANDRI ; P. PEREZ.** Accurate Disparity Estimation for Plenoptic Images. *ECCV,* 2014
- **JOHN CANNY.** *A Computational Approach to Edge Detection*
- A precise real-time stereo algorithm. **NEUS SABATER ; VALTER DRAZIC.** Proceedings of the 27th Conference on Image and Vision Computing New Zealand. ACM, 2012
- **BUADES, ANTONI.** *A non-local algorithm for image denoising,* 2005